# EUROPÄISCHE PATENTANMELDUNG

(11) **EP 1 521 075 A2**
(43) Veröffentlichungstag der Anmeldung: **06.04.2005**
(21) Anmeldenummer: 04104199.7
(22) Anmeldetag: 02.09.2004
(51) Int. Cl.: G01N 15/08

(54) **Vorrichtung und Verfahren zur Bestimmung der Permeabilität eines umlaufenden Bandes**

(30) Priorität: 19.09.2003 DE 10343913
(71) Anmelder: Voith Paper Patent GmbH, 89522 Heidenheim (DE)
(72) Erfinder: Ischdonat, Thomas, 89429, Bachhagel (DE); Sollinger, Michael, Dr., 70184, Stuttgart (DE); Muench, Rudolf, 89551, Koenigsbronn (DE); Pfifferling, Ralf, 89547, Gerstetten (DE)

(57) **Zusammenfassung**

Die Erfindung betrifft eine Vorrichtung (10) und ein Verfahren zur Bestimmung der Permeabilität eines umlaufenden Bandes (11), insbesondere eines wasseraufnehmenden Entwässerungsbandes in einer Papiermaschine. Die Vorrichtung ist mit einer Düse (12) aus der ein Messfluid auf das bzw. durch das Band (11) strömt ausgerüstet. Schwankungen in der Strömung des Messfluids und des Düsenaustrittsdruckes können die Messung der Permeabilität verfälschen. Deshalb weist die Vorrichtung (10) erfindungsgemäß eine Einrichtung (104) zur Ermittlung der Geschwindigkeit des Bandes (11) und/oder eine Einrichtung (19) zur Ermittlung der Düsenaustrittsgeschwindigkeit und des Düsenaustrittsdruckes des Messfluids auf. Diese drei Messgrößen werden gleichzeitig gemessen, so dass eine Schwankung einer dieser Messgrößen die Genauigkeit der Permeabilitätsmessung nicht beeinträchtigen kann.

## Beschreibung

Die Erfindung betrifft eine Vorrichtung zur Bestimmung der Permeabilität eines umlaufenden Bandes, insbesondere eines wasseraufnehmenden Entwässerungsbandes in einer Papiermaschine, mit einer Düse, aus der ein Messfluid auf das bzw. durch das Band strömt.

Allgemein sind aus dem Stand der Technik Vorrichtungen zur Messung der Permeabilität an umlaufenden Bändern bekannt. Bei diesen Vorrichtungen wird Wasser durch das Band gepresst, und mittels einer Druckmessung die Permeabilität des Bandes bestimmt. Nachteilig bei den aus dem Stand der Technik bekannten Vorrichtungen ist jedoch, dass diese entweder einen konstanten Wasserdruck oder einen konstanten Wasserdurchfluss erfordern. Wenn der Wasserdruck oder der Wasserdurchfluss nicht konstant gehalten werden kann, wird das Messergebnis verfälscht.

Die Erfindung hat die Aufgabe eine Vorrichtung der eingangs genannten Art dahingehend zu verbessem, dass sie auch bei veränderlichen Strömungsverhältnissen im Messfluid eine genaue Bestimmung der Permeabilität ermöglicht.

Die Erfindung löst die gestellte Aufgabe durch eine Vorrichtung der eingangs genannten Art, bei der erfindungsgemäß eine Einrichtung zur Ermittlung der Geschwindigkeit des Bandes und/oder eine Einrichtung zur Ermittlung der Düsenaustrittsgeschwindigkeit und des Düsenaustrittsdruckes des Messfluids vorgesehen ist. Durch die gleichzeitige Messung der Bandgeschwindigkeit, der Düsenaustrittsgeschwindigkeit und des Düsenaustrittsdruckes ist die Vorrichtung bei der Bestimmung der Permeabilität unabhängig von schwankenden Druck- oder Geschwindigkeitsverhältnissen des Messfluids. Somit liefert die Vorrichtung immer einen genauen Wert für die Permeabilität. Außerdem erlaubt die erfindungsgemäße Vorrichtung eine hohe Messgeschwindigkeit und eine hohe Auflösung der Messpunkte entlang der Breite des Bandes. Es ist biespielsweise möglich, alle zwei Millimeter eine Messung durchzuführen. Vorteilhaft ist ebenfalls, dass die Messungen durchgeführt werden können, während das umlaufende Band in Betrieb ist. Die erfindungsgemäße Vorrichtung ermöglicht es, die Permeabilität über der gesamten Einsatzdauer des Bandes zu verfolgen. Dadurch ist ein Betreiber in der Lage, die Restlebensdauer des Bandes einzuschätzen und einen Bandwechsel rechtzeitig zu planen. Auf diese Weise können unvorhergesehene Stillstandszeiten ausgeschlossen werden. Auf diese Weise lassen sich nicht nur lokale Störstellen quantitativ charakterisieren, auch die Erstellung einer "Permeabilitäts-Landkarte" mit guter Auflösung ist möglich. Voraussetzung hierfür ist jedoch das Vorhandensein sowohl eines Band-Triggers als auch eines Wegaufnehmers am traversierenden Messkopf.

Die Einrichtung zur Ermittlung der Düsenaustrittsgeschwindigkeit und des Düsenaustrittsdruckes kann eine Blende, an der zu beiden Seiten jeweils ein Drucksensor angeordnet ist, aufweisen. Durch diese Anordnung kann in Strömungsrichtung ein vor der Blende herrschender Vordruck konstant gehalten und eine Durchflussmenge durch den Druckabfall an der Blende eingestellt werden. Der Düsenaustrittsdruck kann durch den Drucksensor nach der Blende gemessen werden. Die Düsenaustrittsgeschwindigkeit kann durch den Vordruck vor der Blende und den Düsenaustrittsdruck nach der Blende berechnet werden. Vorteilhafterweise liegt der Düsenaustrittsdruck zwischen 10 und 50 bar, wobei Drücke zwischen 15 und 30 bar gute Ergebnisse liefern.

Um den Düsenaustrittsdruck und die Düsenaustrittsgeschwindigkeit beeinflussen zu können, kann die Öffnung der Blende variabel sein.

Abhängig von der Permeabilität des Bandes kann das Verhältnis der Düsenöffnung zur Blendenöffnung in einem Intervall von 0,25 bis 4 liegen. Ein kleines Düsenöffnungsverhältnis ist für hochpermeable Bänder geeignet und ein großes Düsenöffnungsverhältnis für niederpermeable Bänder.

Die Einrichtung zur Ermittlung der Geschwindigkeit des Bandes ist besonders betriebssicher und zuverlässig, wenn sie mit einem optischen Sensor ausgerüstet ist. Der optische Sensor erkennt eine immer wieder umlaufende Stelle des Bandes, die vorteilhafterweise eine Bandnaht, an der die beiden Enden des endlos umlaufenden Bandes verbunden sind, ist.

Damit das Messfluid, das vorteilhafterweise Wasser ist, die gleiche Temperatur hat wie das Band in seinem Betrieb, kann die Vorrichtung in einer weiteren Ausführungsform mit einem Temperatursensor zur Messung der Temperatur des Bandes ausgerüstet sein. Selbstverständlich kann die Temperaturmessung des Messfluids auch während des Betriebes durchgeführt werden. In weiterer Ausführung kann die Temperatur des Bands und die Feuchte des Bands zeitgleich gemessen werden, vorzugsweise mittels lediglich einer gleichen Traversiereinheit.

Um einen Temperaturunterschied zwischen der Temperatur des Messfluids und der Temperatur des Bandes ausgleichen zu können, kann der Temperatursensor mit mindestens einer Heizeinrichtung zur Aufheizung des Messfluids verbunden sein. Der Temperatursensor regelt dann über die Heizeinrichtung die Temperatur des Messfluids auf den Temperaturwert des Bandes. Dann ist eine Messung der Permeabilität unter den Betriebsbedingungen des Bandes, wie sie beim Entwässein einer Faserstoffbahn herrschen, sichergestellt.

In einer Weiterbildung der Erfindung ist die Einrichtung zur Ermittlung der Geschwindigkeit des Bandes und/oder die Einrichtung zur Ermittlung der Düsenaustrittsgeschwindigkeit und des Düsenaustrittsdruckes und/oder der Temperatursensor mit einer Datenverarbeitungseinheit verbunden. Die Datenverarbeitungseinheit wertet die Messwerte aus. Die Datenverarbeitungseinheit kann mit einem Reinigungsaggregat verbunden sein, das die ausgewerteten Messergebnisse von der Datenverarbeitungseinheit erhält. Wenn kritische Messwerte vorliegen, kann dann das Reinigungsaggregat das Band an den betreffenden Stellen reinigen.

Um eine kompakte und somit platzsparende Bauweise zu ermöglichen, können die Düse und/oder der Temperatursensor an einem Messkopf angeordnet sein. Außerdem gewährleistet der Messkopf, dass die Düse senkrecht auf das Band aufgebracht wird.

Um genaue Messergebnisse zu erhalten, kann der Messkopf eine definierte Messfläche aufweisen. Aus diesem Grund kann der Messkopf eine auf dem Band anpressbare Kontaktfläche aufweisen. Es ist jedoch auch möglich, dass der Messkopf als ein Rahmen ausgebildet ist, der die genau definierte Messfläche umgrenzt.

Wenn der Rahmen mit Gleitschuhen und/oder Rollen versehen ist, kann das umlaufende Band relativ reibungsarm unter dem angepressten Rahmen fortbewegt werden.

In einer Weiterbildung der Erfindung ist der Messkopf aus einem abriebsfesten Material gefertigt, damit die Standzeiten des Messkopfes möglichst hoch sind. Empfehlenswerte Werkstoffe für den Messkopf sind Keramikwerkstoffe.

Damit eine optimale Messung sichergestellt ist, kann der Messkopf mit einem bestimmten Anpressdruck gegen das Band angepresst und/oder die Düse innerhalb des Messkopfes unabhängig vom Anpressdruck des Messkopfes zusätzlich gegen das Band angepresst werden.

Da die Genauigkeit des Messergebnisses vom Anpressdruck der Düse gegen das Band abhängt, kann die Anpresskraft für den Anpressdruck der Düse mit einem Sicherheitsfaktor von 1 bis 20 versehen sein.

Gute Messergebnisse können erzielt werden, wenn der Anpressdruck des Messkopfes gegen das Band zwischen 200 N/m² und 1.500 N/m² liegt. Insbesondere bei 400 N/m² und 800 N/m² werden sehr gute Messergebnisse erzielt.

In einer Weiterbildung der Erfindung weist die Vorrichtung einen Kompressor auf, um einen gewünschten Druck für das Messfluid zu erreichen.

In einer bevorzugten Ausführungsform ist der Kompressor wegen seines günstigen Betriebsverhaltens eine Axialkolbenpumpe.

Vorteilhafterweise kann die Vorrichtung mit einer Einrichtung zur Pulsationsdämpfung versehen sein, da es wegen der Genauigkeit des Messergebnisses wichtig ist, Pulsationen bezüglich des Druckes und der Durchflussgeschwindigkeit zu vermeiden.

Konstruktiv sehr einfach ist es, wenn die Einrichtung zur Pulsationsdämpfung ein Druckluftbehälter ist.

Außerdem betrifft die Erfindung ein Verfahren zur Messung der Permeabilität eines umlaufenden Bandes, insbesondere eines wasseraufnehmenden Entwässerungsbandes in einer Papiermaschine, mit einer Vorrichtung nach einem der Ansprüche 1 bis 21, gekennzeichnet durch folgende Schritte:
a) Erzeugung eines Messfluid-Volumenstroms,
b) aufbringen des Messfluid-Volumenstroms auf das umlaufende Band,
c) verfahren des Messkopfes an eine erste Messstelle zwischen den beiden Bandrändem,
d) aufsetzen des Messkopfes auf das Band,
e) Messung des Messfluiddruckes vor der Blende, des Messfluiddruckes nach der Blende und der Bandgeschwindigkeit
f) Wiederholung des Schrittes e) für die restlichen Messstellen zwischen den beiden Bandrändern.

Das gemessene Permeabilitätssignal setzt sich dabei aus mehreren Komponenten zusammen. Nach Bernoulli gilt: p+ 1/2 p·v² = konstant. Das Messsignal kann demnach als eine Summe unterschiedlicher dynamischer Drücke aufgefasst werden: Permeabilität = f(p) = f(dv/dt (Banddurchlässigkeit)) + f(v(Band)) + f(Düsengeometrie).

Die Größe f(v(Band)) setzt sich aus dem Volumen V1 des Bands unter der Düsenöffnung der Messeinrichtung und der Geschwindigkeit des Bands zusammen: f(dv/dt (Band) = V1 • v(Band).

Die Größe f(Düsengeometrie) ist im wesentlichen abhängig von dem eingestellten Vordruck, dem Anpressdruck der Düsenvorrichtung an das Band, dem Düsendurchmesser und der Düsengeometrie, wobei f(Düsengeomtrie) « f(v(Band) ∥ f(Banddurchlässigkeit).

Bei dem erfindungsgemäßen Verfahren können die Messwerte in einem nachfolgenden Schritt in der Datenverarbeitungseinheit ausgewertet werden.

In einem nächsten Schritt kann das mit der Datenverarbeitungseinheit verbundene Reinigungsaggregat das Band nach der Messwertauswertung an betreffenden Stellen reinigen.

Die Erfindung betrifft ebenfalls eine Formerpartie einer Papiermaschine, die mit einer Vorrichtung nach einem der Ansprüche 1 bis 21 ausgerüstet ist.

Ebenso umfasst die Erfindung eine Pressenpartie einer Papiermaschine, die mit einer Vorrichtung nach einem der Ansprüche 1 bis 21 ausgerüstet ist.

Nachfolgend wird ein Ausführungsbeispiel der erfindungsgemäßen Vorrichtung anhand der beiliegenden Zeichnungen näher erläutert.

Im Einzelnen zeigen:
- Figur 1: einen Schaltplan der erfindungsgemäßen Vorrichtung;
- Figur 2: eine Draufsicht auf eine erste Ausführungsform eines Messkopfes;
- Figur 3: eine Seitenansicht des Messkopfes aus Figur 2;
- Figur 4: eine Draufsicht auf eine zweite Ausführungsform eines Messkopfes;
- Figur 5: eine Seitenansicht des Messkopfes aus Figur 4.

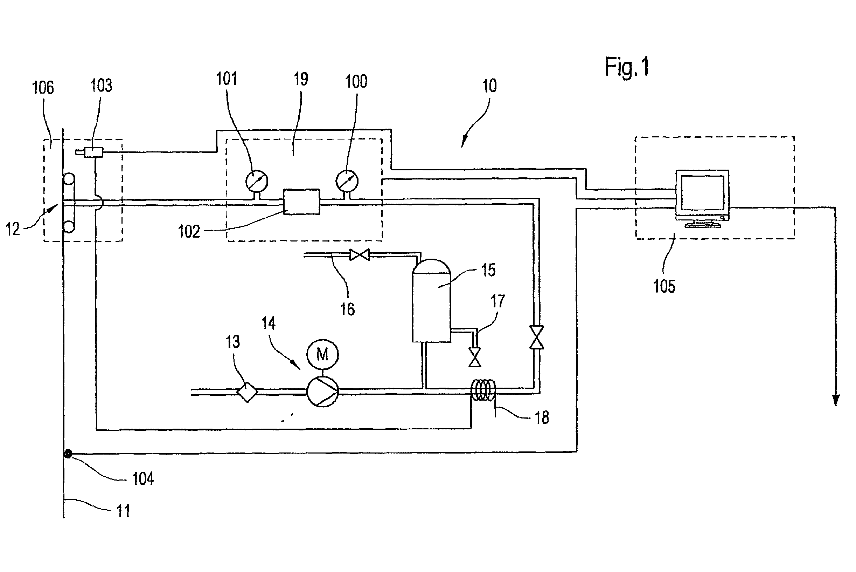

Die Figur 1 zeigt eine Vorrichtung 10 zur Bestimmung der Permeabilität eines umlaufenden Bandes 11, das ein wasseraufnehmendes Entwässerungsband in einer Papiermaschine ist. Aus einer Düse 12 strömt ein Messfluid, das vorzugsweise Wasser sein kann, auf das Band 11. Das Messfluid wird in einem Filter 13 gereinigt und mit einem vorzugsweise druckgeregelten Kompressor 14 auf einen bestimmten Betriebsdruck gebracht. Dieser Betriebsdruck kann zwischen 10 und 50 bar liegen, wobei insbesondere bei 15 bis 30 bar sehr gute Messergebnisse erzielt werden. Nach dem Kompressor 14 ist das Messfluid einen Druckluftbehälter 15 verbunden, der mit einem bestimmten Luftdruck beaufschlagt ist, um Pulsationen des Messfluids zu dämpfen.

Vor der Messung wird der Druckbehälter 15 über die Druckleitung 17 bis zum Niveau des Abgangs entleert. Die Druckleitung 17 wird dann geschlossen und die Belüftungsleitung 16 geöffnet, der Druckluftbehälter 15 wird mit Druckluft befüllt, anschließend wird die Betüftungsteitung 16 geschlossen. Die eingeschlossene Druckluft dient als Luftpolster für die Pulsationsdämpfung. Mit Hilfe des Kompressors 14 wird nun der Arbeitsdruck des Messfluids geregelt. Das Luftpolster wird entsprechend komprimiert. Das Messfluid fließt nicht durch den Druckluftbehälter 15. Nach Passieren des Druckluftbehälters 15 wird das Messfluid durch eine Heizeinrichtung 18 mit vorzugsweisem Temperatursensor auf die Betriebstemperatur des Bandes 11 aufgeheizt. Von der Heizeinrichtung 18 gelangt das Messfluid zu einer Einrichtung 19, die Drucksensoren 100 und 101 und eine Blende 102 aufweist. Durch die Einrichtung 19 kann somit durch die in Strömungsrichtung vor der und nach der Blende 102 gemessenen Drücke die Austrittsgeschwindigkeit des Messfluids aus der Düse 12 und sein Austrittsdruck aus der Düse 12 ermittelt werden. Ein Temperatursensor 103 misst die Temperatur des Bandes 11. Er ist mit der Heizeinrichtung 18 verbunden, so dass die Temperatur des Messfluids immer auf die Betriebstemperatur des Bandes 11 geregelt werden kann. Die Vorrichtung 10 ist ferner mit einer Einrichtung 104 zur Messung der Bandgeschwindigkeit versehen. Die Einrichtung 104 kann ein optischer Sensor sein, der eine periodisch umlaufende Markierung erkennt, und somit die Bandgeschwindigkeit ermittelt. Die Einrichtung 19, der Temperatursensor 103 und die Einrichtung 104 sind jeweils mit einer Datenverarbeitungseinheit 105 verbunden. Mit Hilfe der von der Einrichtung 19 und der Einrichtung 104 gemessenen Drücke, der Düsenaustrittsgeschwindigkeit und der Bandgeschwindigkeit kann die Datenverarbeitungseinheit 105 die Permeabilität bestimmen. Die Datenverarbeitungseinheit 105. wertet die Messwerte aus, und gibt sie an ein hier nicht näher dargestelltes Reinigungsaggregat weiter. Das Reinigungsaggregat kann dann im Bedarfsfall die betreffenden Stellen auf dem Band 11 reinigen. Die Düse 12 und der Temperatursensor 103 sind in einem Messkopf 106 zusammengefasst. Die Düse 12 ist im Messkopf 106 senkrecht zum Band 11 angeordnet, damit das Messfluid optimal durch das Band 11 gedrückt werden kann. Der Messkopf 106 wird zusammen mit der Düse 12 gegen das Band 11 mit einem bestimmten Anpressdruck gedrückt. Sowohl der Messkopf 106 als auch die Düse 12 können jeweils unabhängig voneinander mit einem bestimmten Anpressdruck gegen das Band 11 gepresst werden.

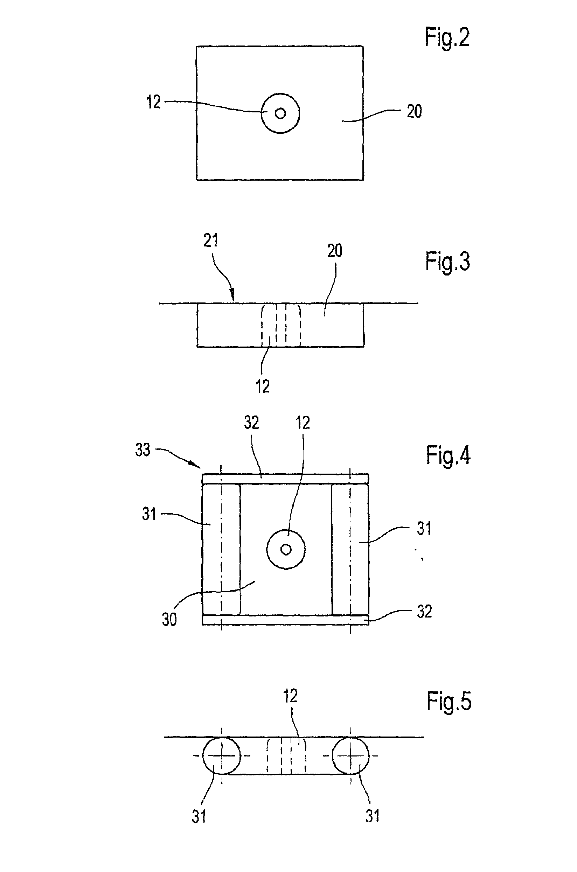

Die Figuren 2 und 3 zeigen einen Messkopf 20, der eine anpressbare Kontaktfläche 21 zum Anpressen des Messkopfes 20 gegen das Band 11 aufweist. Die Kontaktfläche 21 stellt eine definierte Messfläche für die durchzuführende Messung dar. In dem Messkopf 20 ist ebenfalls die Düse 12 angeordnet.

Die Figuen 4 und 5 zeigen als eine weitere Ausführungsform den Messkopf 30. Der Messkopf 30 ist mit Rollen 31 versehen, mit denen er gegen das Band 11 gepresst wird. Bei angepresstem Messkopf 30 kann somit das Band 11 relativ reibungsarm unter den Rollen 31 hindurchgeführt werden. Die Rollen 31 sind in Verbindungselementen 32 gelagert, so dass sie zusammen mit den Rollen 31 einen Rahmen 33 bilden. In dem Rahmen 33 ist die Düse 12 angeordnet. Der Rahmen 33 definiert für die durchzuführende Messung die Messfläche.

Die Messköpfe 20 und 30 gewährleisten eine definierte Messfläche, mit der das Band 11 während der Permeabilitätsmessung in Berührung steht. Ferner ist die Düse 12 in den Messköpfen 20 und 30 senkrecht zum Verlauf des Bandes 11 angeordnet, wodurch sichergestellt ist, dass das Messfluid senkrecht auf das Band 11 auftrifft, und somit eine optimale Permeabilitätsmessung gewährleistet.

### Bezugszeichenliste

- 10: Vorrichtung
- 11: Band
- 12: Düse
- 13: Filter
- 14: Kompressor
- 15: Druckluftbehälter
- 16: Entlüftungsleitung
- 17: Druckleitung
- 18: Heizeinrichtung
- 19: Einrichtung
- 20: Messkopf
- 21: Kontaktfläche
- 30: Messkopf
- 31: Rolle
- 32: Verbindungselement
- 33: Rahmen
- 100, 101: Drucksensor
- 102: Blende
- 103: Temperatursensor
- 104: Einrichtung
- 105: Datenverarbeitungseinheit
- 106: Messkopf

## Patentansprüche

1. Vorrichtung (10) zur Bestimmung der Permeabilität eines umlaufenden Bandes (11), insbesondere eines wasseraufnehmenden Entwässerungsbandes in einer Papiermaschine, mit einer Düse (12) aus der ein Messfluid auf das bzw. durch das Band (11) strömt,
**dadurch gekennzeichnet,**
**dass** sie eine Einrichtung (104) zur Ermittlung der Geschwindigkeit des Bandes (11) und/oder eine Einrichtung (19) zur Ermittlung der Düsenaustrittsgeschwindigkeit und des Düsenaustrittsdruckes des Messfluids aufweist.

2. Vorrichtung (10) nach Anspruch 1,
**dadurch gekennzeichnet,**
**dass** die Einrichtung (19) zur Ermittlung der Düsenaustrittsgeschwindigkeit und des Düsenaustrittsdruckes eine Blende (102), an der zu beiden Seiten jeweils ein Drucksensor (100, 101) angeordnet ist, aufweist.

3. Vorrichtung (10) nach Anspruch 2,
**dadurch gekennzeichnet,**
**dass** die Öffnung der Blende (102) variabel ist.

4. Vorrichtung (10) nach Anspruch 3,
**dadurch gekennzeichnet,**
**dass** das Verhältnis der Düsenöffnung zur Blendenöffnung in einem Intervall von 0,25 bis 4 liegt.

5. Vorrichtung (10) nach einem der Ansprüche 1 bis 4,
**dadurch gekennzeichnet,**
**dass** die Einrichtung (104) zur Ermittlung der Geschwindigkeit des Bandes (11) mit einem optischen Sensor ausgerüstet ist.

6. Vorrichtung (10) nach einem der Ansprüche 1 bis 5,
**dadurch gekennzeichnet,**
**dass** sie einen Temperatursensor (103) zur Messung der Temperatur des Bandes (11 ) aufweist.

7. Vorrichtung (10) nach Anspruch 6,
**dadurch gekennzeichnet,**
**dass** der Temperatursensor (103) mit mindestens einer Heizeinrichtung (18) zur Aufheizung des Messfluids verbunden ist.

8. Vorrichtung (10) nach einem der Ansprüche 1 bis 7,
**dadurch gekennzeichnet,**
**dass** die Einrichtung (104) zur Ermittlung der Geschwindigkeit des Bandes (11) und/oder die Einrichtung (19) zur Ermittlung der Düsenaustrittsgeschwindigkeit und des Düsenaustrittsdruckes und/oder der Temperatursensor (103) mit einer Datenverarbeitungseinheit (105) verbunden sind.

9. Vorrichtung (10) nach Anspruch 8,
**dadurch gekennzeichnet,**
**dass** die Datenverarbeitungseinheit (105) mit einem Reinigungsaggregat verbunden ist.

10. Vorrichtung (10) nach einem der Ansprüche 1 bis 9,
**dadurch gekennzeichnet,**
**dass** die Düse (12) und/oder der Temperatursensor (103) an einem Messkopf (20, 30, 106) angeordnet sind.

11. Vorrichtung (10) nach Anspruch 10,
**dadurch gekennzeichnet,**
**dass** der Messkopf (20) eine auf dem Band anpressbare Kontaktfläche (21) aufweist.

12. Vorrichtung (10) nach Anspruch 10,
**dadurch gekennzeichnet,**
**dass** der Messkopf (30) als ein Rahmen (33) ausgebildet ist.

13. Vorrichtung (10) nach Anspruch 12,
**dadurch gekennzeichnet,**
**dass** der Rahmen (33) mit Gleitschuhen und/oder Rollen (31) versehen ist.

14. Vorrichtung (10) nach einem der Ansprüche 10 bis 13,
**dadurch gekennzeichnet,**
**dass** der Messkopf (20, 30, 106) aus einem abriebfesten Material gefertigt ist.

15. Vorrichtung (10) nach einem der Ansprüche 10 bis 14,
**dadurch gekennzeichnet,**
**dass** der Messkopf (20, 30, 106) mit einem bestimmten Anpressdruck gegen das Band (11) anpressbar ist und/oder die Düse (12) innerhalb des Messkopfes (20, 30, 106) unabhängig vom Anpressdruck des Messkopfes (20, 30, 106) zusätzlich gegen das Band (11) anpressbar ist.

16. Vorrichtung (10) nach einem der Ansprüche 10 bis 15,
**dadurch gekennzeichnet,**
**dass** die Anpresskraft für den Anpressdruck der Düse (12) einen Sicherheitsfaktor von 1 bis 20 aufweist.

17. Vorrichtung (10) nach einem der Ansprüche 10 bis 16,
**dadurch gekennzeichnet,**
**dass** der Anpressdruck des Messkopfes (20, 30, 106) gegen das Band (11) zwischen 200 N/m² und 1.500 N/m² liegt.

18. Vorrichtung (10) nach einem der Ansprüche 1 bis 17,
**dadurch gekennzeichnet,**
**dass** sie einen Kompressor (14) aufweist.

19. Vorrichtung (10) nach Anspruch 18,
**dadurch gekennzeichnet,**
**dass** der Kompressor (14) eine Axialkolbenpumpe ist.

20. Vorrichtung (10) nach einem der Ansprüche 1 bis 19,
**dadurch gekennzeichnet,**
**dass** sie mit einer Einrichtung zur Pulsationsdämpfung versehen ist.

21. Vorrichtung (10) nach Anspruch 20,
**dadurch gekennzeichnet,**
**dass** die Einrichtung zur Pulsationsdämpfung ein Druckluftbehälter (15) ist.

22. Verfahren zur Bestimmung der Permeabilität eines umlaufenden Bandes (11), insbesondere eines wasseraufnehmenden Entwässerungsbandes in einer Papiermaschine, mit einer Vorrichtung nach einem der Ansprüche 1 bis 21, **gekennzeichnet durch folgende Schritte:**
a, Erzeugung eines Messfluid-Volumenstroms,
b, aufbringen des Messfluid-Volumenstroms auf das umlaufende Band (11), c, verfahren des Messkopfes (20, 30, 106) an eine erste Messstelle zwischen den beiden Bandrändern,
d, aufsetzen des Messkopfes (20, 30, 106) auf das Band (11),
e, Messung des Messfluiddruckes vor der Blende, des Messfluiddruckes nach der Blende und der Bandgeschwindigkeit,
f, Wiederholung des Schrittes e) für die restlichen Messstellen zwischen den beiden Bandrändern.

23. Verfahren nach Anspruch 22,
**dadurch gekennzeichnet,**
**dass** die Messwerte in der Datenverarbeitungseinheit (105) ausgewertet werden.

24. Verfahren nach Anspruch 22 oder 23,
**dadurch gekennzeichnet,**
**dass** das mit der Datenverarbeitungseinheit (105) verbundene Reinigungsaggregat das Band (11) nach der Messwertauswertung an betreffenden Stellen reinigt.

25. Formerpartie einer Papiermaschine,
**dadurch gekennzeichnet,**
**dass** sie mit einer Vorrichtung nach einem der Ansprüche 1 bis 21 ausgerüstet ist.

26. Pressenpartie einer Papiermaschine,
**dadurch gekennzeichnet,**
**dass** sie mit einer Vorrichtung nach einem der Ansprüche 1 bis 21 ausgerüstet ist.
